# EUROPEAN PATENT SPECIFICATION

(11) **EP 4 314 175 B1**
(45) Date of publication and mention of the grant of the patent: **13.08.2025**
(21) Application number: 21836207.7
(22) Date of filing: 20.12.2021
(51) Int. Cl.: C09D 175/00, C09D 133/02, C09D 167/00, C08G 73/00, C09D 201/08, C09D 179/00

(54) **TWO-COMPONENT AQUEOUS COATING COMPOSITION**
ZWEIKOMPONENTIGE WÄSSRIGE BESCHICHTUNGSZUSAMMENSETZUNG
COMPOSITION DE REVÊTEMENT AQUEUSE À DEUX COMPOSANTS

(30) Priority: 31.03.2021 EP 21166416
(43) Date of publication of application: 07.02.2024
(73) Proprietor: Akzo Nobel Coatings International B.V., 1077 WW Amsterdam (NL)
(72) Inventor: ENGELEN VAN, Antonius Hendrikus Gerardus, 1077 WW Amsterdam (NL); JONGKIND, Lukas Jurriaan, 1077 WW Amsterdam (NL)
(74) Representative: Akzo Nobel IP Department
(86) International application number: PCT/EP2021/086881
(87) International publication number: WO 2022/207135

(56) References cited:
- EP-A1- 1 162 237
- WO-A1-2009/098460
- WO-A1-2012/015295
- JP-A- 2007 238 753
- JP-A- 2016 041 637
- US-A1- 2010 233 368
- WACKER: "Creating tomorrow's solutions elastomers, PlastiCs & ComPosites siliCones Compounds and Properties", April 2012 (2012-04-01), pages 1 - 32, XP055897310, Retrieved from the Internet <URL:http://www.chemwinfo.com/private_folder/Uploadfiles2018_December/Silicones_-_Compunds_and_Properties.pdf> [retrieved on 20220303]

## Description

### Field of the Invention

The present invention relates to a two-component aqueous coating composition.

### Background of the Invention

Aqueous coating compositions comprising a binder polymer dissolved or dispersed in an aqueous phase are well-known in the art. When hard coatings that are scratch-resistance and chemical resistant are required, crosslinking of the binder polymer is desired.

Binder polymers crosslinked with polyisocyanate are known to result in coatings with good hardness and good scratch-resistance and chemical resistance. Polyisocyanates are, however, undesirable from a health point of view.

Carbodiimides are known as crosslinkers for carboxyl functional resins. The reaction mechanism is explained in Progress in Organic Coatings 58 (2007) 231-236. In WO2012/015295 is disclosed the use of multifunctional polycarbodiimides as crosslinking agents in a coating composition that comprises a carboxylic acid functional polyurethane dispersed in water.

Carbodiimide crosslinked waterborne polyurethane coatings, however, cannot match the properties of isocyanate crosslinked waterborne polyurethane coatings, in particular in terms of chemical resistance and hardness.

Organo-functional alkoxysilanes are known as crosslinkers for various binder polymers, such as polyacrylates, polyesters, polyurethanes, or polyethers. In aqueous coating compositions, the amount of organo-functional alkoxysilane that can be used is limited in view of stability issues when the alkoxysilane is combined with an aqueous resin component.

In EP 1 162 237 A1 is disclosed a wear-resistance coating composition, in particular for traffic marking, comprising a polycarbodiimide, an aqueous emulsion polymer reactive with carbodiimide moieties, and an alkoxysilane which is either reactive with the aqueous emulsion polymer, reactive with the polycarbodiimide, or attached to the polycarbodiimide. The amount of alkoxysilane used in the coating compositions of EP 1 162 237 A1 is relatively low (between 1.8 and 3.5 wt% based on solid emulsion polymer).

There is a desire to provide a crosslinkable aqueous coating composition without the above-mentioned problems.

### Summary of the Invention

It has now been found that a two-component aqueous coating composition comprising a resin component and a hardener component can be provided that results in a coating with good hardness, scratch resistance, and chemical resistance without using polyisocyanate as crosslinker. By using a hardener component comprising a carbodiimide with non-ionic emulsifying groups and an alkoxysilane, in a weight ratio in the range of from 10:90 to 85:15, a relatively high amount of alkoxysilane crosslinker can be used without stability issues upon mixing the hardener component with the aqueous resin component.

Accordingly, the invention provides in a first aspect a two-component aqueous coating composition comprising:
A an aqueous resin component comprising a carboxyl-functional resin; and
B a substantially water-free hardener component comprising:
   - a carbodiimide comprising in the range of from 1 to 20 carbodiimide moieties and terminal and/or pendant non-ionic emulsifying groups; and
   - an alkoxysilane selected from the group consisting of an alkoxysilane of general formula (I)

      R¹[-(CH₂)ₙ-Si(OR²)₃₋ₘ(R³)ₘ]ₚ (I)

      and a tetraalkylorthosilicate of general formula (II)

      Si(OR²)₄ (II)

      wherein:
      m is 0 or 1;
      n is an integer with a value in the range of from 0 to 6;
      p is 1 or 2, preferably 1;
      R¹ is an organic group comprising an epoxide group, a vinyl group, or a (meth)acryloyl group, or is a hydrogen atom
      and R¹ does not comprise a carboxylic functional group, a mercapto-functional group, or an amine-functional group;
      R² is an alkyl group having 1 to 4 carbon atoms; and
      R³ is an alkyl group having 1 to 4 carbon atoms,
wherein the weight ratio of the carbodiimide to the alkoxysilane in hardener component B is in the range of from 10:90 to 85:15.

It is an advantage of the coating composition of the invention that it results in a coating with improved chemical resistance compared to a coating composition with carbodiimide as the only crosslinker whilst the hardness is similar or even improved. Without wishing to be bound to any theory, it is believed that due to the presence of the carbodiimide with non-ionic emulsifying groups, alkoxysilane can be brought in close proximity of the dispersed resin, provided the carbodiimide and alkoxysilane are present in the ratio specified. Moreover, a relatively high amount of alkoxysilane can be brought in close proximity of the dispersed resin. This results in improved crosslinking and chemical resistance. The coating composition shows very good initial hardness.

A further advantage is that hardener component B has a relatively low viscosity, so that components A and B can be combined relatively easy, even without organic solvent. If desired, the two components can be mixed by simple hand-stirring.

The coating composition provides a crosslinked coating with good hardness, scratch resistance, and chemical resistance and can therefore suitably be used as protective or decorative coating on any type of substrate, in particular metal, plastic, wooden, or ceramic substrates.

### Detailed Description of the Invention

The coating composition according to the invention is a two-component aqueous coating composition. It comprises an aqueous resin component A comprising a carboxyl-functional resin dissolved or dispersed in an aqueous phase and a substantially water-free hardener component B. Components A and B are prepared and stored separately and are not combined until shortly before application of the coating composition.

Hardener component B comprises a carbodiimide and an alkoxysilane in a weight ratio of the carbodiimide to the alkoxysilane in the range of from 10:90 to 85:15.

The carbodiimide comprises in the range of from 1 to 20 carbodiimide moieties, preferably in the range of from 1 to 10 carbodiimide moieties, even more preferably of from 1 to 5. Reference herein to the number of carbodiimide moieties is to the average number of carbodiimide moieties. The -NCN- equivalent weight, i.e. the molecular weight for 1 mole of carbodiimide moiety, is preferably in the range of from 400 to 1,600 g/mole. The carbodiimide preferably has a number average molecular weight in the range of from 500 to 10,000 g/ mole, more preferably of from 1,000 to 5,000 g/mole. The carbodiimide preferably has a weight average molecular weight in the range of from 1,000 to 20,000 g/ mole, more preferably of from 1,500 to 10,000 g/mole. The number average and weight average molecular weight can be determined by means of gel permeation chromatography using polystyrene standards.

Carbodiimides are known in the art and are suitably prepared by reacting polyisocyanates and optionally monoisocyanates in the presence of a catalyst at a temperature in the range of rom 80 to 180 °C to form a carbodiimide prepolymer with terminal isocyanate groups. Chain extenders and chain stoppers may be used to control the length of the polymer chain and the molecular weight. Functional groups other than the carbodiimide moieties may be built-in via such chain extenders and/or chain stoppers or by using polyisocyanates and/or monoisocyanates with such functional groups. In WO2012/015295 is for example described carbodiimides with alkoxysilyl or methacryloyl functional groups prepared by using alkoxysilyl- or methacryloyl-functional monoisocyanates in the carbodiimide forming reaction.

The carbodiimide in component B may be an aliphatic or an aromatic carbodiimide.

The carbodiimide in component B comprises terminal and/or pendant non-ionic emulsifying groups, such as for example polyether groups. Terminal polyether groups are suitably built into the carbodiimide by reacting the isocyanate-functional and carbodiimide-functional prepolymer with a polyether mono-alcohol or a polyether monoamine as chain stopper. Pendant polyether groups are suitably built into the carbodiimide by reacting the isocyanate-functional and carbodiimide-functional prepolymer with a diol or a diamine with a pendant polyether group.

Preferably, the terminal and/or pendant non-ionic emulsifying groups are selected from the group consisting of poly(ethyleneglycol)alkyl ether groups, poly(propyleneglycol)alkyl ether groups, and poly(ethyleneglycol/ propyleneglycol)alkyl ether groups with a molecular weight in the range of from 100 and 3,000 Dalton. Poly(ethyleneglycol)methyl ether groups, poly (propyleneglycol)methyl ether groups, and poly(ethyleneglycol/propylene glycol)methyl ether groups with a molecular weight in the range of from 100 and 3,000 Dalton are particularly preferred.

The carbodiimide may have any suitable content of non-ionic emulsifying groups. Preferably, the content of the non-ionic emulsifying groups is in the range of from 3 to 80 wt% of the total weight of the carbodiimide, more preferably in the range of from 5 to 50 wt%, even more preferably in the range of from 10 to 30 wt%. Reference herein to the content of the non-ionic emulsifying groups is to the wt% of monomers with non-ionic emulsifying moieties used in the polymerization of the carbodiimide, based on the total weight of monomers used.

The carbodiimide in component B may comprise further functional groups with reactivity towards the carboxyl-functional resin in component A or with a capability of self-condensation or of condensation with the alkoxysilane, directly or after hydrolysis. Examples of suitable further functional groups are mentioned at page 5 of WO2012/015295, incorporated herein by reference. The carbodiimide preferably comprises alkoxysilyl or alkylalkoxysilyl functional groups as further functional groups, more preferably alkoxysilyl or alkylalkoxysilyl functional groups with one or two carbon atoms in any one of its alkyl and alkoxy moieties, such as for example trimethoxysilyl, triethoxysilyl, methyldimethoxysilyl, ethyldimethoxysilyl, or dimethyl ethoxysilyl groups. Particularly preferred further functional groups are trimethoxysilyl and triethoxysilyl groups.

Preferably, the carbodiimide comprises alkoxysilyl or alkylalkoxysilyl functional groups in such amount that the carbodiimide has a Si content in the range of from 2 to 15 wt%, more preferably of from 3 to 10 wt%, based on the weight of the carbodiimide. The Si content can suitably be determined by means of elemental analysis using X-ray fluorescence spectroscopy.

The alkoxysilane is selected from the group consisting of an alkoxysilane of general formula (I):

R¹[-(CH₂)ₙ-Si(OR²)₃₋ₘ(R³)ₘ]ₚ (I)

and a tetraalkylorthosilicate of general formula (II)

Si(OR²)₄ (II)

wherein
m is 0 or 1;
n is an integer with a value in the range of from 0 to 6;
p is 1 or 2, preferably 1;
R¹ is an organic group comprising an epoxide group, a vinyl group, or a (meth)acryloyl group, or is a hydrogen atom and R¹ does not comprise a carboxylic functional group, a mercapto-functional group, or an amine-functional group;
R² is an alkyl group having 1 to 4 carbon atoms; and
R³ is an alkyl group having 1 to 4 carbon atoms.

Preferably, the alkoxysilane is an alkoxysilane of general formula (I). R¹ may be directly covalently linked to the silicon atom of alkoxysilyl or alkylalkoxysilyl group Si(OR²)₃₋ₘ(R³)ₘ (n is 0), or indirectly via a hydrocarbon linker group (CH₂)ₙ with 1 to 6 carbon atoms (n is in the range of from 1 to 6). If R¹ is indirectly linked to the silicon atom of the (alkyl)alkoxysilyl group via a hydrocarbon linker group (CH₂)ₙ, then n is preferably 1 or 3. Only if p is, R¹ may be a hydrogen atom. If R¹ is a hydrogen atom, then n is preferably in the range of from 1 to 6, more preferably is 1 or 3.

Preferably, R¹ comprises an epoxide group, a vinyl group, or a (meth)acryloyl group, more preferably an epoxide group or a vinyl group, even more preferably an epoxide group. If R¹ comprises an epoxide group, the alkoxysilane is an epoxysilane; if R¹ comprises a vinyl group, the alkoxysilane is a vinylsilane.

Particularly preferred alkoxysilanes are selected from the group consisting of 3-glycidyloxypropyltrimethoxysilane, 3-glycidyloxypropylmethyldiethoxy silane, 3-glycidyloxypropylmethyldimethoxysilane, 3-glycidyloxypropyltriethoxysilane, vinyltriethoxysilane, and vinyltrimethoxysilane.

The organic group R¹ does not comprise a carboxylic functional group, a mercapto-functional group, or an amine-functional group. Such groups are reactive with the carbodiimide moieties in the carbodiimide and would result in an unstable hardener component B.

If the alkoxysilane is a tetraalkoxyorthosilicate of general formula (II), R² preferably is an alkyl group with 1 or 2 carbon atoms. A particular suitably alkoxysilane of general formula (II) is tetraethylorthosilicate (TEOS).

The weight ratio of the carbodiimide to the alkoxysilane in component B is in the range of from 10:90 to 85:15, preferably of from 15:85 to 80:20.

Hardener component B is substantially water-free. Reference herein to substantially water-free is to a water content of less than 0.5 wt%, preferably less than 0.1 wt%, even more preferably less than 0.01 wt% of water, based on the total weight of component B. Water is preferably not explicitly added, e.g. to adjust the viscosity of component B, but merely present, if at all, in small amounts as part of any additives present in component B.

Component B may comprise additives such as antioxidants or surfactants in typical amounts. Preferably, the total amount of additives in component B is in the range of from 0.1 to 3.0 wt%, based on the total weight of component B.

Preferably, the total content of carbodiimide and alkoxysilane in component B is at least 50 wt%, more preferably at least 70 wt%, or even at least 80 wt%. The total content of carbodiimide and alkoxysilane in component B may be up to 100 wt%, preferably up to 95 wt%. A total content of carbodiimide and alkoxysilane in the range of from 70 to 95 wt% is particularly preferred.

Component B preferably comprises at most 5 wt% of organic solvent, more preferably at most 1 wt%, even more preferably is free of organic solvent. Reference herein to organic solvent is to any volatile organic compound (VOC) as specified in Directive 2004/42/CE of the European Parliament and of the Council of 21 April 2004.

Component B is typically obtained by mixing a carbodiimide (optionally provided as a mixture of the carbodiimide and a plasticizer for controlling the viscosity), the alkoxysilane, and optionally one or more additives. Reference herein to a plasticizer is to an organic compound having an initial boiling point at standard pressure above 250 °C. Such compound is non-volatile and therefore not considered an organic solvent.

Component B may thus comprise a plasticizer, preferably a plasticizer of a hydrophilic nature such that it can easily be dispersed in aqueous component A, when components A and B are combined. Examples of suitable plasticizers include tributoxyethyl phosphate, tetraethylene glycol dimethyl ether, triethylene glycol mono(2-hexylhexanoate), and non-volatile coalescing agents. The amount of plasticizer is preferably in the range of from 0 to 30 wt%, more preferably of from 0 to 15 wt%, based on the weight of the carbodiimide.

The viscosity of component B has to be sufficiently low for component B to be dispersible into aqueous component A. Preferably, component B has a viscosity of at most 300 mPa.s, determined using a rotary viscometer at a shear rate of 3,000 s⁻¹ and a temperature of 20 °C. Preferably, the viscosity is at least 10 mPa.s, more preferably of least 20 mPa.s determined using a rotary viscometer at a shear rate of 100 s⁻¹ and a temperature of 20 °C. The viscosity may be controlled by adjusting the weight ratio of the carbodiimide to the alkoxysilane, the size and functional groups of the carbodiimide, the type of alkoxysilane, and the optional use of a plasticizer or organic solvent.

Component A comprises a carboxyl-functional resin dissolved or dispersed in an aqueous phase, preferably dispersed in an aqueous phase. The carboxyl-functional resin is a film-forming polymer and may have any suitable polymer backbone, preferably a polyurethane, polyacrylate, polyester backbone or a hybrid of any thereof such as a polyester-urethane hybrid or a polyurethane-polyacrylate hybrid. Even more preferably, the carboxyl-functional resin is a carboxyl-functional polyurethane, a carboxyl-functional polyacrylate, or a carboxyl-functional polyurethane-polyacrylate hybrid. The carboxyl-functional resin may be a combination of two of more carboxyl-functional resins.

The carboxyl functionality of the resin is reactive with the carbodiimide moieties in the carbodiimide. The resin comprises at least two carboxyl groups per molecule of resin.

Preferably, the carboxyl-functional resin has an acid value in the range of from 5 to 200 mg KOH/g polymer, more preferably of from 10 to 180 mg KOH/g polymer. Acid value is determined by Method A in ISO 2114.

The carboxyl-functional resin may comprise functional groups other than the carboxyl groups, preferably crosslinkable functional groups such as silanol or alkoxysilyl groups.

Component A may comprise a further resin other than the carboxyl-functional resin. Such further resin may be any resin suitable for use in an aqueous coating composition, preferably a resin dispersed in water. Examples of such further resins include polyacrylate, alkyd, polyurethane, polyester, and polyamine resins, and combinations of two or more thereof.

Component A preferably comprises at most 50 wt% of a further resin, based on the total weight of resin solids in component A, more preferably at most 30 wt%, even more preferably at most 10 wt%. In one embodiment, component A is free of any further resin other than the carboxyl-functional resin.

Components A preferably comprises in the range of from 20 to 60 wt% resin solids, more preferably of from 25 to 45 wt%, based on the total weight of component A.

Component A may comprise further compounds such as extender pigments, color pigments, biocide, coalescing solvent, and any additives typically used in coating compositions such as for example one or more of a surfactant, wetting agent, corrosion inhibitor, defoaming agent, dispersing agent, leveling agent, UV stabilizer, or antioxidant. Component A may comprise any suitable amount of pigment, depending on the type of coating composition. Typically, component A comprises in the range of from 0 to 70 wt% extender pigments and/or color pigments.

Component A preferably comprises a base to control the reactivity of the carboxyl groups towards the carbodiimide groups in the carbodiimide in component B, more preferably a volatile base, even more preferably a volatile base selected from the group consisting of ammonia and organic amine compounds having up to 6 carbon atoms, such as methylamine, dimethylamine, trimethylamine, ethylamine, diethylamine, dimethyl ethylamine, and triethylamine.

The coating composition, i.e. components A and B combined, preferably comprises in the range of from 3 to 100 wt% alkoxysilane, based on the solid weight of the carboxyl-functional resin, more preferably of from 4 to 80 wt%, even more preferably of from 5 to 50 wt%.

Reference herein to solids content with respect to an organic compound is to the non-volatile content as determined according to ISO 3251:2008(E) by heating a sample of 1 gram for 60 minutes at 125 °C.

The coating composition may comprises any suitable weight ratio of component B to component A. Preferably, the coating composition comprises at least 3 wt%, more preferably in the range of from at least 5 to 50 wt%, even more preferably of from 7 to 40 wt% or from 8 to 30 wt% of hardener component B, based on the weight of resin component A.

The coating composition may comprise extender pigments, color pigments, biocide, and any additives typical for aqueous coating compositions. The pigments, biocide, coalescing solvent, and any additives may be present in resin component A, in hardener component B, or in both components. Preferably, any extender pigments and any color pigments are comprised in resin component A.

The coating composition may comprise a crosslinking catalyst, in particular a catalyst catalyzing crosslinking of alkoxysilyl or silanol groups formed upon hydrolysis of alkoxysilyl groups. Such catalysts are known in the art. Suitable crosslinking catalysts comprise strong acids or strong bases, optionally blocked, and organometal salts such as organotin salts. Examples of suitable catalysts include para-toluene sulfonic acid, methyl sulfonic acid, 1,8-diazabicyclo[5.4.0]undec-7-ene (DBU), 1,4-diazabicyclo[2.2.2]octane (DABCO), 1,1,3,3-tetramethylguanidine (TMG), and dibutyltin dilaurate (DBTL).

The coating composition may suitably be applied to a substrate after components A and B have been combined. The coating composition can be cured at any suitable temperature, both at ambient temperatures, for example in the range of from 10 to 80 °C, and at elevated temperatures, for example in the range of from 80 to 120 °C. When applied to a substrate and allowed to cure, a crosslinked coating with good hardness, scratch resistance, and chemical resistance is formed.

The coating composition may be used as protective or decorative coating on any type of substrate, in particular metal, plastic (including composite substrates), wooden, or ceramic substrates (including concrete and glass). The coating composition may be used as a primer coating, i.e. directly applied upon a substrate, or may be used as a topcoat on a primed substrate. It may also be used as an intermediate layer, top layer, or clear coat in a multiple layer coating system.

The invention is further illustrated by means of the following non-limiting examples.

### Examples

The ingredients used in the examples are shown in Table 1.

**Table 1 Ingredients used**

| Resin components | |
|---|---|
| R1 | Carboxyl-functional acrylic-styrene copolymer dispersed in water; 40 wt% solids; acid value 20 mg KOH/g resin solids (Neocryl XK-82, ex. DSM) |
| R2 | Carboxyl-functional polyester dissolved in water, 26 wt% solids, acid value 42 mg KOH/g resin solids (Setaqua 6407, ex. Allnex). |
| R3 | Carboxyl-functional, self-crosslinking styrene-acrylate polymer dispersed in water (latex); 43 wt% solids, acid value 20.8 mg KOH/g resin solids. |
| R4 | Aqueous resin component comprising 70.5 wt% latex R3, 9 wt% additional water, 11 wt% thickeners, 4.5 wt% coalescing solvent and 5 wt% paint additives (wetting agent, defoaming agent, dispersing agents). Resin solids content: 30.5 wt%. |
| R5 | Aqueous resin component consisting of 100 weight parts R1 and 4 weight parts n-butyl glycol as coalescing solvent |

| Carbodiimides | |
|---|---|
| CDI1 | Multifunctional carbodiimide (alkoxysilane groups and non-ionic emulsifying groups) with plasticizer. Solids content 100 wt%: 75 wt% carbodiimide solids, 25 wt% plasticizer solids. Average number of carbodiimide moieties: above 1 and below 2. |
| CDI2 | Multifunctional carbodiimide (alkoxysilane groups and non-ionic emulsifying groups) with plasticizer. Solids content 100 wt%: 75 wt% carbodiimide solids, 25 wt% plasticizer solids. Average number of carbodiimide moieties: above 2 and below 3. |
| CDI3 | Carbodiimide with non-ionic emulsifying groups without plasticizer. Solids content 100 wt%: 100 wt% carbodiimide solids. Average number of carbodiimide moieties: above 1 and below 2. |

| Alkoxysilanes | |
|---|---|
| GLYMO | 3-Glycidyloxypropyl trimethoxysilane (Dynaslan GLYMO) |
| VTEO | Vinyltriethoxysilane (Dynaslan VTEO) |
| VTMO | Vinyltrimethoxysilane (Dynaslan VTMO) |
| GLYEO | 3-Glycidoxypropyltriethoxysilane (Dynaslan GLYEO) |
| TEOS | Tetraethoxyorthosilicate |

### EXAMPLE 1

For various hardener components, differing in weight ratio of carbodiimide and alkoxysilane, the ease of emulsification in an aqueous phase was determined as follows. Hardener components were prepared by mixing carbodiimide (CDI) and alkoxysilane (silane) in the ratios indicated in Table 2. The hardener component was then mixed with water in a 1:1 weight ratio. Ease of emulsification was ranked from 1 (phase separation) to 5 (easy to emulsify by manual stirring) as follows:
1. Mechanical stirring needed for emulsification. Phase separation occurred.
2. Prolonged mechanical stirring needed for emulsification. No phase separation occurred.
3. Light mechanical stirring needed for emulsification. No phase separation occurred.
4. Thorough manual stirring needed for emulsification.
5. Easy emulsification by manual stirring.

The results show that emulsification of the hardener component by simple manual stirring is poor (rankings 1 and 2) if the weight ratio of carbodiimide to alkoxysilane is outside the range of from 10:90 to 85:15.

**Table 2 Ease of emulsification of hardener component into an aqueous phase**

| No. | CDI | | silane | | weight ratio CDI/silane | Ease of emulsification |
|---|---|---|---|---|---|---|
| | type | wt % | type | wt % | | |
| 1 | CDI1 | 100 | - | - | - | 2 |
| 2 | CDI1 | 90 | VTEO | 10 | 87:13 | 3 |
| 3 | CDI1 | 75 | VTEO | 25 | 69:31 | 5 |
| 4 | CDI1 | 50 | VTEO | 50 | 43:57 | 5 |
| 5 | CDI1 | 25 | VTEO | 75 | 20:80 | 4 |
| 6 | CDI1 | 10 | VTEO | 90 | 8:92 | 2 |
| 7 | - | - | VTEO | 100 | - | 1 |
| 8 | CDI1 | 90 | VTMO | 10 | 87:13 | 3 |
| 9 | CDI1 | 75 | VTMO | 25 | 69:31 | 4 |
| 10 | CDI1 | 50 | VTMO | 50 | 43:57 | 5 |
| 11 | CDI1 | 25 | VTMO | 75 | 20:80 | 5 |
| 12 | CDI1 | 10 | VTMO | 90 | 8:92 | 2 |
| 13 | - | - | VTMO | 100 | - | 1 |
| 14 | CDI1 | 90 | GLYEO | 10 | 87:13 | 2 |
| 15 | CDI1 | 75 | GLYEO | 25 | 69:31 | 4 |
| 16 | CDI1 | 50 | GLYEO | 50 | 43:57 | 5 |
| 17 | CDI1 | 25 | GLYEO | 75 | 20:80 | 5 |
| 18 | CDI1 | 10 | GLYEO | 90 | 8:92 | 2 |
| 19 | - | - | GLYEO | 100 | - | 1 |
| 20 | CDI1 | 90 | GLYMO | 10 | 87:13 | 3 |
| 21 | CDI1 | 75 | GLYMO | 25 | 69:31 | 4 |
| 22 | CDI1 | 50 | GLYMO | 50 | 43:57 | 5 |
| 23 | CDI1 | 25 | GLYMO | 75 | 20:80 | 5 |
| 24 | CDI1 | 10 | GLYMO | 90 | 8:92 | 3 |
| 25 | - | - | GLYMO | 100 | - | 1 |
| 26 | CDI2 | 100 | - | - | - | 2 |
| 27 | CDI2 | 90 | VTEO | 10 | 87:13 | 2 |
| 28 | CDI2 | 75 | VTEO | 25 | 69:31 | 4 |
| 29 | CDI2 | 50 | VTEO | 50 | 43:57 | 5 |
| 30 | CDI2 | 25 | VTEO | 75 | 20:80 | 5 |
| 31 | CDI2 | 10 | VTEO | 90 | 8:92 | 2 |

### EXAMPLE 2

Different coating compositions were prepared by combining a resin component with a water-free hardener component as indicated in Table 3. The hardener components comprising carbodiimide and alkoxysilane were prepared by mixing the carbodiimide (CDI) and the alkoxysilane (silane) in the wt% indicated in Table 3. Coating compositions 4, 6, 10, 14, 18 and 19 are according to the invention; coatings compositions 1-3, 5, 7-9, 11-13, and 15-17 are comparison compositions.

The coating compositions were applied on tin panels using a draw-down bar at a wet film thickness of 100 µ and were dried for a week at 23 °C and 50% relative humidity.

The chemical resistance of the dried coatings was determined according to Method A of ASTM D5402 using methyl ethyl ketone (MEK) as solvent.

The film hardness of the dried coatings was determined according to the pencil test of ISO 15184.

The results of the chemical resistance and hardness measurements are shown in Table 3. The addition of a hardener component with a carbodiimide and an alkoxysilane improves the chemical resistance of the resulting coating in comparison with a coating composition without such hardener or with a hardener that only comprises a carbodiimide or an alkoxysilane. The pencil hardness of the coating is improved or is comparable to the pencil hardness of a coating from a composition with a hardener that only comprises a carbodiimide or an alkoxysilane.

**Table 3 Coating compositions 1 to 19: composition and coating properties**

| | A | B | | | | | %silane (on resin solids) | MEK resistance (no. of double rubs) | pencil hard ness | comment |
|---|---|---|---|---|---|---|---|---|---|---|
| | | %^{a} | CDI | | silane | | | | | |
| | | | type | % | type | % | | | | |
| 1* | R1 | 0 | - | - | - | - | | 5 | 4B | Bad film formation |
| 2* | R1 | 10 | - | - | GLYMO | 100 | | 55 | B | X; Film defects |
| 3* | R1 | 10 | CDI1 | 100 | - | - | | 60 | B | X |
| 4 | R1 | 10 | CDI1 | 50 | GLYMO | 50 | 12.5 | 200 | HB | |
| 5* | R1 | 10 | CDI2 | 100 | - | - | | | | X; No film formation |
| 6 | R1 | 10 | CDI2 | 50 | GLYMO | 50 | 12.5 | 300 | HB | |
| 7* | R2 | 0 | - | | - | | | | | Film does not dry |
| 8* | R2 | 20 | - | | GLYMO | 100 | | | | X; Film does not dry |
| 9* | R2 | 20 | CDI2 | 100 | - | | | 15 | B | X |
| 10 | R2 | 40 | CDI2 | 50 | GLYMO | 50 | 77 | 190 | B | Longer drying time |
| 11* | R3 | 0 | - | | - | | | 10 | B | |
| 12* | R3 | 11 | - | | GLYMO | 100 | | 200 | B | X |
| 13* | R3 | 11 | CDI1 | 100 | - | | | 200 | B | X |
| 14 | R3 | 22 | CDI1 | 50 | GLYMO | 50 | 26 | 400 | B | |
| 15* | R4 | 0 | - | - | - | - | | 20 | 3B | |
| 16* | R4 | 10 | - | - | GLYMO | 100 | | 25 | 3B | X |
| 17* | R4 | 10 | CDI2 | 100 | - | - | | 60 | B | X |
| 18 | R4 | 10 | CDI2 | 75 | VTEO | 25 | 8.2 | 90 | B | |
| 19 | R4 | 10 | CDI2 | 50 | VTEO | 50 | 16.4 | 60 | B | |

| | | | | | | | | | | |
|---|---|---|---|---|---|---|---|---|---|---|
| * comparison coating composition ^{a} wt% hardener component B based on the total weight of the resin component A X: hardener component cannot be emulsified by hand in the aqueous resin component | | | | | | | | | | |

### EXAMPLE 3

Two different coating compositions were prepared by combining a resin component A (R5: same resin as in R1 but now with a small amount of n-butyl glycol as coalescing solvent) with a water-free hardener component B, as indicated in Table 4. The hardener components comprising carbodiimide and alkoxysilane were prepared by mixing the carbodiimide and the alkoxysilane in the wt% indicated in Table 4.

The coating compositions were applied on tin panels as described in EXAMPLE 3. The chemical resistance and the film hardness of the dried coatings were determined as described in EXAMPLE 2. The results are shown in Table 4.

**Table 4 Coating compositions of Example 3: composition and coating properties**

| | A | B | | | | | %silane (on resin solids) | MEK resistance (no. of double rubs) | pencil hardness |
|---|---|---|---|---|---|---|---|---|---|
| | | %^{a} | CDI | | silane | | | | |
| | | | type | % | type | % | | | |
| 20 | R5 | 9.6 | CDI1 | 50 | GLYMO | 50 | 12.5 | >300 | B |
| 21 | R5 | 9.6 | CDI1 | 50 | TEOS | 50 | 12.5 | 147 | B |

| | | | | | | | | | |
|---|---|---|---|---|---|---|---|---|---|
| ^{a} wt% hardener component B based on the total weight of the resin component A | | | | | | | | | |

### EXAMPLE 4

Two different coating compositions were prepared by combining a resin component A (R1) with a water-free hardener component B, as indicated in Table 5. The hardener components comprising carbodiimide and alkoxysilane were prepared by mixing the carbodiimide and the alkoxysilane in the wt% indicated in Table 5.

The coating compositions were applied on tin panels as described in EXAMPLE 3. The chemical resistance and the film hardness of the dried coatings were determined as described in EXAMPLE 2. The results are shown in Table 5.

**Table 5 Coating compositions of Example 4: composition and coating properties**

| | A | B | | | | | %silane (on resin solids) | MEK resistance (no. of double rubs) | pencil hardness |
|---|---|---|---|---|---|---|---|---|---|
| | | %^{a} | CDI | | silane | | | | |
| | | | type | % | type | % | | | |
| 22 | R1 | 15 | CDI1 | 50 | GLYMO | 50 | 18.75 | >300 | 2B |
| 23 | R1 | 15 | CDI3 | 50 | GLYMO | 50 | 18.75 | 127 | B |

| | | | | | | | | | |
|---|---|---|---|---|---|---|---|---|---|
| ^{a} wt% hardener component B based on the total weight of the resin component A | | | | | | | | | |

## Claims

1. A two-component aqueous coating composition comprising:
A an aqueous resin component comprising a carboxyl-functional resin; and
B a substantially water-free hardener component comprising:
- a carbodiimide comprising in the range of from 1 to 20 carbodiimide moieties and terminal and/or pendant non-ionic emulsifying groups; and
- an alkoxylsilane selected from the group consisting of an alkoxysilane of general formula (I)
R¹[-(CH₂)ₙ-Si(OR²)₃₋ₘ(R³)ₘ]ₚ (I)
and a tetraalkylorthosilicate of general formula (II)
Si(OR²)₄ (II)
wherein:
m is 0 or 1;
n is an integer with a value in the range of from 0 to 6;
p is 1 or 2, preferably 1;
R¹ is an organic group comprising an epoxide group, a vinyl group, or a (meth)acryloyl group, or is a hydrogen atom
and R¹ does not comprise a carboxylic functional group, a mercapto-functional group, or an amine-functional group;
R² is an alkyl group having 1 to 4 carbon atoms; and
R³ is an alkyl group having 1 to 4 carbon atoms,
wherein the weight ratio of the carbodiimide to the alkoxysilane in hardener component B is in the range of from 10:90 to 85:15.

2. A two-component aqueous coating composition according to claim 1 comprising in the range of from 4 to 80 wt% of the alkoxysilane, based on the solid weight of carboxyl-functional resin.

3. A two-component aqueous coating composition according to claim 2 comprising in the range of from 5 to 50 wt% of the alkoxysilane, based on the solid weight of carboxyl-functional resin.

4. A two-component aqueous coating composition according to any one of the preceding claims, wherein the non-ionic emulsifying groups are selected from the group consisting of poly(ethyleneglycol)alkyl ether groups, poly(propyleneglycol)alkyl ether groups, and poly(ethyleneglycol/propyleneglycol)alkyl ether groups with a molecular weight in the range of from 100 and 3,000 Dalton.

5. A two-component aqueous coating composition according to any one of the preceding claims, wherein the carbodiimide comprises alkoxysilyl or alkylalkoxysilyl functional groups.

6. A two-component aqueous coating composition according to any one of the preceding claims, wherein R² and R³ are, independently, an alkyl group having 1 or 2 carbon atoms.

7. A two-component aqueous coating composition according to claim 6, wherein the alkoxysilane is selected from the group consisting of 3-glycidyloxypropyl trimethoxysilane, 3-glycidyloxypropylmethyl diethoxysilane, 3-glycidyloxy propylmethyldimethoxy silane, 3-glycidyloxypropyltriethoxysilane, vinyltriethoxysilane, and vinyl trimethoxysilane.

8. A two-component aqueous coating composition according to any one of the preceding claims, wherein the weight ratio of the carbodiimide to the alkoxysilane in hardener component B is in the range of from 15:85 to 80:20.

9. A two-component aqueous coating composition according to any one of the preceding claims, wherein component B comprises at most 5 wt% of organic solvent, preferably at most 1 wt%, more preferably is free of organic solvent.

10. A two-component aqueous coating composition according to any one of the preceding claims, wherein component B has a viscosity of at most 300 mPa.s determined using a rotary viscometer at a shear rate of 3,000 s⁻¹ and a temperature of 20 °C.

11. A two-component aqueous coating composition according to any one of the preceding claims, wherein component A comprises the carboxyl-functional resin dispersed in an aqueous phase.

12. A two-component aqueous coating composition according to any one of the preceding claims, wherein the carboxyl-functional resin is a carboxyl-functional polyurethane, a carboxyl-functional polyacrylate, or a carboxyl-functional polyurethane-polyacrylate hybrid.

## Patentansprüche

1. Zweikomponentige wässrige Beschichtungszusammensetzung, umfassend:
A eine wässrige Harzkomponente, die ein carboxylfunktionelles Harz umfasst; und
B eine weitgehend wasserfreie Härterkomponente, umfassend:
- ein Carbodiimid, das im Bereich von 1 bis 20 Carbodiimideinheiten und endständige und/oder seitenständige nichtionische emulgierende Gruppen umfasst; und
- ein Alkoxysilan, ausgewählt aus der Gruppe bestehend aus einem Alkoxysilan der allgemeinen Formel (I)
R¹[-(CH₂)ₙ-Si(OR²)₃₋ₘ(R³)ₘ]ₚ (I)
und einem Tetraalkylorthosilikat der allgemeinen Formel (II)
Si(OR²)₄ (II)
wobei:
m für 0 oder 1 steht;
n für eine ganze Zahl mit einem Wert im Bereich von 0 bis 6 steht;
p für 1 oder 2, vorzugsweise 1, steht;
R¹ für eine organische Gruppe steht, die eine Epoxidgruppe, eine Vinylgruppe oder eine (Meth)acryloylgruppe umfasst, oder für ein Wasserstoffatom steht
und R¹ keine carboxylfunktionelle Gruppe, keine mercaptofunktionelle Gruppe und keine aminfunktionelle Gruppe umfasst;
R² für eine Alkylgruppe mit 1 bis 4 Kohlenstoffatomen steht; und
R³ für eine Alkylgruppe mit 1 bis 4 Kohlenstoffatomen steht,
wobei das Gewichtsverhältnis von Carbodiimid zu Alkoxysilan in Härterkomponente B im Bereich von 10:90 bis 85:15 liegt.

2. Zweikomponentige wässrige Beschichtungszusammensetzung nach Anspruch 1, umfassend im Bereich von 4 bis 80 Gew.-% des Alkoxysilans, bezogen auf das Feststoffgewicht an carboxylfunktionellem Harz.

3. Zweikomponentige wässrige Beschichtungszusammensetzung nach Anspruch 2, umfassend im Bereich von 5 bis 50 Gew.-% des Alkoxysilans, bezogen auf das Feststoffgewicht an carboxylfunktionellem Harz.

4. Zweikomponentige wässrige Beschichtungszusammensetzung nach einem der vorhergehenden Ansprüche, wobei die nichtionischen emulgierenden Gruppen aus der Gruppe bestehend aus Poly(ethylenglykol)alkylethergruppen, Poly(propylenglykol)alkylethergruppen und Poly(ethylenglykol/propylenglykol)alkylethergruppen mit einem Molekulargewicht im Bereich von 100 bis 3000 Dalton ausgewählt sind.

5. Zweikomponentige wässrige Beschichtungszusammensetzung nach einem der vorhergehenden Ansprüche, wobei das Carbodiimid alkoxysilyl- oder alkylalkoxysilylfunktionelle Gruppen umfasst.

6. Zweikomponentige wässrige Beschichtungszusammensetzung nach einem der vorhergehenden Ansprüche, wobei R² und R³ unabhängig für eine Alkylgruppe mit 1 oder 2 Kohlenstoffatomen stehen.

7. Zweikomponentige wässrige Beschichtungszusammensetzung nach Anspruch 6, wobei das Alkoxysilan aus der Gruppe bestehend aus 3-Glycidyloxypropyltrimethoxysilan, 3-Glycidyloxypropylmethyldiethoxysilan, 3-Glycidyloxypropylmethyldimethoxysilan, 3-Glycidyloxypropyltriethoxysilan, Vinyltriethoxysilan und Vinyltrimethoxysilan ausgewählt ist.

8. Zweikomponentige wässrige Beschichtungszusammensetzung nach einem der vorhergehenden Ansprüche, wobei das Gewichtsverhältnis von Carbodiimid zu Alkoxysilan in Härterkomponente B im Bereich von 15:85 bis 80:20 liegt.

9. Zweikomponentige wässrige Beschichtungszusammensetzung nach einem der vorhergehenden Ansprüche, wobei Komponente B höchstens 5 Gew.-% organisches Lösungsmittel, vorzugsweise höchstens 1 Gew.-%, umfasst und weiter bevorzugt frei von organischem Lösungsmittel ist.

10. Zweikomponentige wässrige Beschichtungszusammensetzung nach einem der vorhergehenden Ansprüche, wobei Komponente B eine unter Verwendung eines Rotationsviskosimeters bei einer Scherrate von 3000 s⁻¹ und einer Temperatur von 20 °C bestimmte Viskosität von höchstens 300 mPa.s aufweist.

11. Zweikomponentige wässrige Beschichtungszusammensetzung nach einem der vorhergehenden Ansprüche, wobei Komponente A das carboxylfunktionelle Harz in einer wässrigen Phase dispergiert umfasst.

12. Zweikomponentige wässrige Beschichtungszusammensetzung nach einem der vorhergehenden Ansprüche, wobei es sich bei dem carboxylfunktionellen Harz um ein carboxylfunktionelles Polyurethan, ein carboxylfunktionelles Polyacrylat oder ein carboxylfunktionelles Polyurethan-Polyacrylat-Hybrid handelt.

## Revendications

1. Composition aqueuse de revêtement à deux composants comprenant :
A un composant résine aqueuse comprenant une résine à fonctionnalité carboxyle ; et
B un composant durcisseur sensiblement exempt d'eau comprenant :
- un carbodiimide comprenant dans la plage de 1 à 20 groupements carbodiimide et des groupes émulsifiants non ioniques terminaux et/ou pendants ; et
- un alcoxylsilane choisi dans le groupe constitué par un alcoxysilane de formule générale (I)
R¹[-(CH₂)ₙ-Si(OR²)₃₋ₘ(R³)ₘ]ₚ (I)
et un tétraalkylorthosilicate de formule générale (II)
Si (OR²)₄ (II)
où :
m est 0 ou 1 ;
n est un entier ayant une valeur dans la plage de 0 à 6 ;
p est 1 ou 2, de préférence 1 ;
R¹ est un groupe organique comprenant un groupe époxyde, un groupe vinyle ou un groupe (méth)acryloyle, ou est un atome d'hydrogène
et R¹ ne comprend pas un groupe fonctionnel carboxylique, un groupe fonctionnel mercapto ou un groupe fonctionnel amine ;
R² est un groupe alkyle ayant 1 à 4 atomes de carbone ; et
R³ est un groupe alkyle ayant 1 à 4 atomes de carbone,
dans laquelle le rapport pondéral du carbodiimide sur l'alcoxysilane dans le composant durcisseur B est dans la plage de 10:90 à 85:15.

2. Composition aqueuse de revêtement à deux composants selon la revendication 1, comprenant dans la plage de 4 à 80 % en poids de l'alcoxysilane, par rapport au poids de solides de la résine à fonctionnalité carboxyle.

3. Composition aqueuse de revêtement à deux composants selon la revendication 2, comprenant dans la plage de 5 à 50 % en poids de l'alcoxysilane, par rapport au poids de solides de la résine à fonctionnalité carboxyle.

4. Composition aqueuse de revêtement à deux composants selon l'une quelconque des revendications précédentes, dans laquelle les groupes émulsifiants non ioniques sont choisis dans le groupe constitué par des groupes éther de poly(éthylèneglycol)alkyle, des groupes éther de poly(propylèneglycol)alkyle et des groupes éther de poly(éthylèneglycol/propylèneglycol)alkyle ayant un poids moléculaire dans la plage de 100 à 3 000 daltons.

5. Composition aqueuse de revêtement à deux composants selon l'une quelconque des revendications précédentes, dans laquelle le carbodiimide comprend des groupes fonctionnels alcoxysilyle ou alkylalcoxysilyle.

6. Composition aqueuse de revêtement à deux composants selon l'une quelconque des revendications précédentes, dans laquelle R² et R³ sont, indépendamment, un groupe alkyle ayant 1 ou 2 atomes de carbone.

7. Composition aqueuse de revêtement à deux composants selon la revendication 6, dans laquelle l'alcoxysilane est choisi dans le groupe constitué par le 3-glycidyloxypropyl triméthoxysilane, le 3-glycidyloxypropylméthyl diéthoxysilane, le 3-glycidyloxy propylméthyldiméthoxy silane, le 3-glycidyloxypropyltriéthoxysilane, le vinyltriéthoxysilane et le vinyltriméthoxysilane.

8. Composition aqueuse de revêtement à deux composants selon l'une quelconque des revendications précédentes, dans laquelle le rapport pondéral du carbodiimide sur l'alcoxysilane dans le composant durcisseur B est dans la plage de 15:85 à 80:20.

9. Composition aqueuse de revêtement à deux composants selon l'une quelconque des revendications précédentes, dans laquelle le composant B comprend au plus 5 % en poids de solvant organique, de préférence au plus 1 % en poids, plus préférablement est exempt de solvant organique.

10. Composition aqueuse de revêtement à deux composants selon l'une quelconque des revendications précédentes, dans laquelle le composant B a une viscosité d'au plus 300 mPa.s déterminée en utilisant un viscosimètre rotatif à une vitesse de cisaillement de 3 000 s⁻¹ et une température de 20 °C.

11. Composition aqueuse de revêtement à deux composants selon l'une quelconque des revendications précédentes, dans laquelle le composant A comprend la résine à fonctionnalité carboxyle dispersée dans une phase aqueuse.

12. Composition aqueuse de revêtement à deux composants selon l'une quelconque des revendications précédentes, dans laquelle la résine à fonctionnalité carboxyle est un polyuréthane à fonctionnalité carboxyle, un polyacrylate à fonctionnalité carboxyle ou un hybride polyuréthane-polyacrylate à fonctionnalité carboxyle.
